# EUROPEAN PATENT APPLICATION

(11) **EP 3 363 628 A1**
(43) Date of publication of application: **22.08.2018**
(21) Application number: 18155794.3
(22) Date of filing: 08.02.2018
(51) Int. Cl.: B32B 7/12, B32B 27/08, B32B 27/12, B32B 27/40

(54) **MULTILAYERS FABRICS HAVING IMPROVED UV REFRACTIVE INDEX**

(30) Priority: 16.02.2017 IT 201700017672
(71) Applicant: Consult S.A.S. di Gaspari Elisabetta & C., 37135 Verona VR (IT)
(72) Inventor: Gaspari, Elisabetta, 37121 VERONA (IT)
(74) Representative: Serravalle, Marco

(57) **Abstract**

The invention is directed to a multilayer fabric comprising: a) an external woven fabric; b) an internal woven fabric; c) a membrane placed between the internal fabric and external one, said membrane comprising at least two layers, one of which having a superior UV refractive index compared to the other one; d) an additive comprising a ceramic compound.

The multilayer fabric according to the invention shows a very high UV refractive index and gives a better perceived temperature under the fabric compared to the ones on the market.

In a preferred embodiment, the membrane has a thickness comprised between 35 and 200 µm, and is a polyurethane membrane having a number of layers which can vary from 2 to 3.

The external and internal fabrics are preferably independently selected from: polyester, acrylic, polyamide.

The multilayer fabric according to the present invention is suitable for use in awnings, camping tents and car hoods.

## Description

**.** The present invention is directed to a fabric having an extremely high UV refractive index in addition to general heat refractive properties. Said fabrics can be used as awnings, car hoods, camping tents, and generally in all the fields where a shelter is desired, not only against heat but also against UV rays.

**.** As it is well known, solar radiation comprises three main frequencies: infrared, visible and UV. Infrared corresponds to a frequency higher than 700 nm, visible goes approximately from 400 to 700 nm, while UV radiation comprises UVA (315-400 nm), UVB (280-315 nm) and UVC (100-280 nm).

**.** With the term fabric, it is intended here and throughout the description a woven fabric. For solar ray protection, multilayer or monolayer fabrics containing polyester are used in several applications. Nevertheless, polyester is partially transparent to UV radiation, allowing to a variable though significant percentage of radiation to pass through the fabric.

**.** Another important aspect for fabrics used in the above-mentioned fields, is the temperature perceived under said artifact. The lower is the perceived temperature, the higher is the comfort offered by the fabric.

**.** US2014/162051 discloses a polyester film comprising at last two layers, said layers containing white pigments (e.g. titanium oxide) which reflect UV rays.

**.** GB 2 509 155 discloses a fabric suitable for clothes facilitating weight reduction, said fabric comprising a neoprene layer containing metal oxides of aluminium and silicon inside. The fabric also contains external layers of polyester or nylon.

**.** KR 20150088943 discloses a heat and UV resistant fabric made of three layers, wherein the external layer contains an organic or inorganic compound which shields the heat, while the internal layer contains a UV shielding substance.

**.** Anyway, there is the need for a fabric having improved solar and UV beams reflection characteristics, which gives a better perceived temperature under the fabric compared to the ones on the market.

**.** The present invention relates to a multilayer fabric comprising a central layer comprising a polyurethane membrane, and two external layers which depending on the application can be made of different materials, wherein the multilayer fabric also comprises a ceramic-type additive.

**.** The coupling between central membrane and external fabrics is done by the use of a glue which allows the different layers to be fixed to one another.

**.** With reference to the central membrane, it consists of at least two layers, one of which, the external one, has a UV beams reflective index higher than the second one, which represents the central or internal layer. In other words, external layer colour is preferably a cold and bright colour, while the second layer has a warm and dark colour. Example of good coupled colours are: black/white, blue navy/aquamarine, dark grey/bronze. The most preferred coupling is black/white.

**.** While the bright layer reflects UV radiation, the dark layer is intended to shield the whole solar radiation, providing a darkening function.

**.** Membrane layers are normally two, but a higher number of layers, e.g. three, is also according to the invention. In this case, one more internal layer of bright colour, e.g. white, can be present for a better aesthetic impact.

**.** Polyurethane membrane thickness can vary depending on the application, but it is generally comprised between a minimum of about 35 µm and a maximum of about 200 µm. For awnings and camping tents, the value preferably fluctuates between 40 and 70 µm, even more preferably around 50 µm, while for car hood thicker membranes are normally used, e.g. between 50 and 150 µm.

**.** Preferably, the membrane has flame-retardant characteristics, for example it can pass the UL 94 test.

**.** External fabrics can be of different type and thickness depending on the final use and they do not represent a limitation of the invention as long as they are woven fabrics. More frequently used materials are polyester, acrylic fabric and polyamide. In case of awnings, polyester and acrylic fabric are more frequently used, while for camping tents and car hoods a polyamide is preferred for its mechanic resistance.

**.** The polyurethane membrane is coupled to fabrics by the use of a glue, preferably containing substances improving the proprieties of final multilayer fabric, such as, for example, liquid ceramic, white pigments, and other possible additives.

**.** As a glue, it is possible to use every glue known on the market able to adhere two substances, i.e. the polyurethane membrane with the external fabric. A particularly indicated glue is the polyurethane glue. On the external layer, a sufficiently quantity of liquid ceramic is added to the glue, to significantly enhance UV beams reflection. As liquid ceramic is intended a ceramic dispersion on an organic base, for example polyurethane. A useful liquid ceramic for the present invention is EVO® Xen KD by DyStar. The liquid ceramic is preferably present in a quantity comprised between 0,2% and 5% in weight, more preferably between 0,5% and 3% in weight on the basis of weight of glue.

**.** Another suitable additive for the polyurethane glue of the external layer is a white pigment, preferably in an amount comprised between 1% and 15% by weight, more preferably between 4% and 12% by weight based on the weight of the glue.

**.** On the internal layer, a glue can be applied without any additive, or with one or more of the additives present on the external layer.

**.** The quantity of glue used to make the internal fabric adhere to the membrane vary depending on membrane and fabric weight. Normally, an amount of glue comprised between 20 and 80 g/m² is preferred, being 20 g/m² the minimum quantity required to have a uniform glue layer. An amount exceeding 80 g/m² give a too thick layer, at the cost of final product quality. More preferably the amount of glue varies between 30 g/m² and 60 g/m².

**.** The weight of the external fabric normally varies between 100 and 300 g/m² for fabrics to be used on the external side of an awnings, and between 60 and 200 g/m² for the internal one.

**.** Multilayer fabric is preferably processed with water repellent substances to improve impermeability, and antibacterial and anti-mould additives.

### Example

**.** A two-layer black and white membrane with a thickness of 50 µm by Novotex is used as a multilayer polyurethane membrane.

**.** The coupling between multilayer membrane and external fabric takes place through the coupling with a polyurethane glue through the following procedure:

### 1^{st} Step with a coupling machine:

**.** Lying on a silicone-coated paper (about 85 g/m² by weight) 40 g/m² of adhesive 'Icaflex ADB560' produced by Icap-Sira SpA (polyester-based aromatic PU in MEK (methylethylketone)/tolene as a solvent), containing a percentage equal to 9% of White Pigment ('Patex color white 1 C' by Sarp srl) and 1% of 'PU-Ceramic compound' (Evo-Xen KD by DyStar GmbH).

**.** Pre-drying, in a furnace at a temperature increasing from 75 to 90° for about 3 minutes.

**.** Adhesion of the glue to the 100% acrylic fabric (weight about 200 g/m²), through the first grill/cylinder of the machine at a temperature of about 100°C and a pressure of 3 bar, while simultaneously detaching and collecting the siliconized paper.

**.** Then, in a continuous process, the fabric covered with glue is adhered to the bicolor membrane on its black side; the step takes place by using a much larger cylinder, also which is also heated at about 95°C at a pressing pressure of about 4 bar.

### 2° Step with a coupling machine (same day or day after)

**.** Lying on a silicone-coated paper (about 85 g/m² by weight) 40 g/m² of adhesive 'Icaflex ADB560' produced by Icap-Sira SpA (polyester-based aromatic PU in MEK (methylethylketone)/tolene as a solvent), containing a percentage equal to 9% of White Pigment ('Patex color white 1 C' by Sarp srl) and 1% of 'PU-Ceramic compound' (Evo-Xen KD by DyStar GmbH).

**.** Pre-drying, in a furnace at temperature increasing from 75 to 90° for about 3 minutes.

**.** Adhesion of the glue to the white side of the membrane previously coupled, through the first grill/cylinder of the machine at a temperature of about 100°C and a pressure of 3 bar, while simultaneously detaching and collecting the siliconized paper.

**.** The second fabric (100 % polyester, weight of about 70 g/m²) is adhered to the membrane on the white side in a continuous process; in this process a second cylinder, larger than the first one and heated at about 105°C, with a pressing pressure of about 6 bar and a further pressure of 2.5 bar with a small calender.

### Last step in a finishing machine

**.** After about 2 days for the proper crosslinking of the resin, the obtained multilayer product (final weight about 420 g/m²) is treated in a finishing machine (Rameuse) on both sides with a bath of water repellent (fluorocarbon), anti-bacterial and anti-mould. The product passes through a 'foulard' which contains the mentioned baths and then goes through different furnaces at growing temperatures from 90°C to 160°C, it is then dried and rolled for the final control and shipped.

## Claims

1. Multilayer fabric comprising:
a. an external woven fabric;
b. an internal woven fabric;
c. a membrane placed between the internal fabric and external one, said membrane comprising at least two layers, one of which having a superior UV refractive index compared to the other one;
d. an additive comprising a ceramic compound.

2. Multilayer fabric according to claim 1, wherein both the external and the internal fabrics are selected from: polyester, acrylic, polyamide.

3. Multilayer fabric according to claims 1-2, wherein adhesion between layers a), b) and c) takes place by means of a glue.

4. Multilayer fabric according to claim 3, wherein the glue is a polyurethane glue, and at least the polyurethane layer coupling the external fabric with the membrane comprises the additive comprising a ceramic compound.

5. Multilayer fabric according to claims 3-4, wherein the glue is present in a weight per unit of surface comprised between 20 and 80 g/m².

6. Multilayer fabric according to claims 1-5, wherein the membrane has a thickness comprised between 35 and 200 µm, and is a polyurethane membrane having a number of layers which can vary from 2 to 3.

7. Multilayer fabric according to claims 1-6, wherein at least the layer of glue that binds the external fabric to the membrane comprises a white pigment in a quantity comprised between 1 and 15 % by weight.

8. Awnings obtained by the fabric of any of claims 1-7, wherein the external fabric is polyester or acrylic.

9. Camping tents obtained by the fabric of any of claims 1-7, wherein both external and internal fabrics are polyamide.

10. Car hoods obtained by the fabric of any of claims 1-7, wherein both internal and external fabrics are polyamide.
